(19) Europäisches Patentamt
European Patent Office
Office européen des brevets

(11) **EP 2 282 091 B1**

(12) **EUROPEAN PATENT SPECIFICATION**

(45) Date of publication and mention
of the grant of the patent:
**06.09.2017   Bulletin 2017/36**

(51) Int Cl.:
**F16K 31/06** *(2006.01)*

(21) Application number: **10168502.2**

(22) Date of filing: **06.07.2010**

(54) **Proportional electromagnetic flow control valve**

Proportionales elektromagnetisches Durchflussregelventil

Soupape électromagnétique proportionnelle de contrôle de débit

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **06.08.2009   JP 2009183234**

(43) Date of publication of application:
**09.02.2011   Bulletin 2011/06**

(73) Proprietor: **KYB Corporation
Tokyo 105-6111 (JP)**

(72) Inventors:
• **Tsuchiya, Hideki
Minato-ku Tokyo 105-6111 (JP)**
• **Miya, Yoshiharu
Minato-ku Tokyo 105-6111 (JP)**

(74) Representative: **Grünecker Patent- und
Rechtsanwälte
PartG mbB
Leopoldstraße 4
80802 München (DE)**

(56) References cited:
**DE-A1- 3 644 744      DE-A1-102005 051 177
GB-A- 1 125 102      GB-A- 2 088 251
US-A- 4 518 938      US-A1- 2005 035 320**

**Description**

FIELD OF THE INVENTION

This invention relates to a proportional electromagnetic flow control valve that controls a flow rate of working fluid by increasing or decreasing an opening area of a variable throttle in accordance with a magnetizing current.

BACKGROUND OF THE INVENTION

JP2001-180507A published by the Japan Patent Office in 2001 proposes a proportional electromagnetic flow control valve for a vehicle power steering device. Further prior art is known from document US 4 518 938 A.
The proportional electromagnetic flow control valve comprises a cylindrical sleeve, a fixed iron core, and a shaft inserted into the sleeve and the fixed iron core in a state where it can slide within the sleeve and the fixed iron core. A valve body is formed in a front part of the shaft. A valve seat is provided in a position facing the valve body.
A spring force of a spring, a thrust force of a solenoid, and a differential pressure between working fluid pressures acting on a front end and a rear end of the shaft are exerted on the shaft. The shaft is retained in an axial position where these forces balance. A flow rate of working fluid flowing through the proportional electromagnetic flow control valve is controlled to a value defined by a cross-sectional area of an annular gap formed between the valve seat and the valve body that varies in accordance with an axial position of the shaft, and a differential working fluid pressure between upstream and downstream of the annular gap.

SUMMARY OF THE INVENTION

In the proportional electromagnetic flow control valve according to this prior art, a working fluid dynamic pressure acting on the valve body during a displacement process of the shaft may adversely affect concentricity of the valve body with the valve seat.
If the concentricity of the valve body with the valve seat is adversely affected, a precision of the flow rate control of working fluid decreases. To maintain the concentricity of the valve body with the valve seat, a supporting stiffness of the shaft must be enhanced.
It is therefore an object of this invention to provide a valve structure having a structural advantage to maintain the concentricity of the valve body with the valve seat.
To achieve the above object, this invention provides a proportional electromagnetic flow control valve according to claim 1.
A cross-sectional area of the annular gap is varied according to a displacement position of the shaft.
The valve further comprises a first bearing that supports the shaft between the movable iron core and the seat portion such that a valve chamber formed between the first bearing and the seat portion supplies working fluid to the annular gap and a second bearing that supports the movable iron core in a position detached from the first bearing.
The details as well as other features and advantages of this invention are set forth in the remainder of the specification and are shown in the accompanying drawings.

BRIEF DESCRIPTION OF THE DRAWINGS

FIG. 1 is a schematic diagram of a power steering device to which this invention is applied.
FIG. 2 is a longitudinal sectional view of a proportional electromagnetic flow control valve according to this invention.
FIG. 3 is a longitudinal sectional view of a sleeve according to this invention.
FIG. 4 is an enlarged longitudinal sectional view of essential parts of the proportional electromagnetic flow control valve.
FIG. 5 is a diagram showing a flow rate characteristic of the proportional electromagnetic flow control valve.

DESCRIPTION OF THE PREFERRED EMBODIMENTS

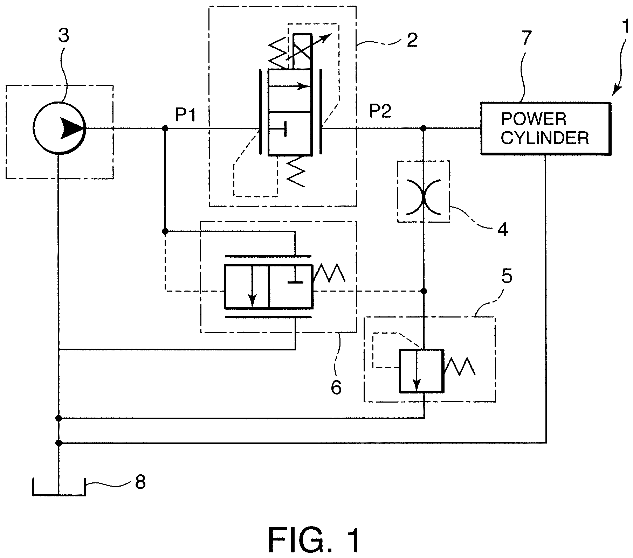

Referring to FIG. 1 of the drawings, a vehicle power steering device 1 comprises a power cylinder 7 that provides a vehicle steering operation with an assisting power and a hydraulic circuit that supplies hydraulic pressure to drive the power cylinder 7. The hydraulic circuit comprises a hydraulic pump 3, a proportional electromagnetic flow control valve 2, a pressure compensation valve 6, a relief valve 5, and an orifice 4.
Working oil discharged by the hydraulic pump 3 is supplied to the power cylinder 7 via the proportional electromagnetic flow control valve 2.

The pressure compensation valve 6 maintains a differential pressure $\Delta P$ between an upstream pressure $P1$ and a downstream pressure $P2$ of the proportional electromagnetic flow control valve 2 at a substantially constant value.

The proportional electromagnetic flow control valve 2 is configured to vary an opening area thereof depending on a magnetizing current supplied thereto. Owing to the pressure compensation valve 6 that maintains the differential pressure $\Delta P$ between the upstream and downstream pressures of the proportional electromagnetic flow control valve 2, the proportional electromagnetic flow control valve 2 supplies the power cylinder 7 with working oil at a flow rate proportional to the opening area.

The relief valve 5 functions as a safety valve that releases working oil in the hydraulic circuit to a reservoir when a pressure in the hydraulic circuit exceeds a predetermined maximum pressure. The hydraulic pressure in the hydraulic circuit is thereby regulated not to exceed the maximum predetermined pressure. The orifice 4 brings about a preferable effect in view of response and stability during the operation of the hydraulic circuit.

When a vehicle steering operation is not underway, the proportional electromagnetic flow control valve 2 is maintained at a minimum opening area such that a minimum flow rate of working oil corresponding to the minimum opening area is supplied to the power cylinder 7. The pressure compensation valve 6 recirculates most of the working oil in the hydraulic circuit to the reservoir 8, thereby reducing energy loss in the hydraulic circuit.

When the vehicle steering operation is underway, the proportional electromagnetic flow control valve 2 increases its opening area. Since the pressure compensation valve 6 maintains the upstream pressure $P1$ of the proportional electromagnetic flow control valve 2 at a constant value, the proportional electromagnetic flow control valve 2 supplies working oil to the power cylinder 7 at a flow rate that is proportional to the opening area. The power cylinder 7 assists the steering operation of vehicle wheels using the supplied hydraulic pressure.

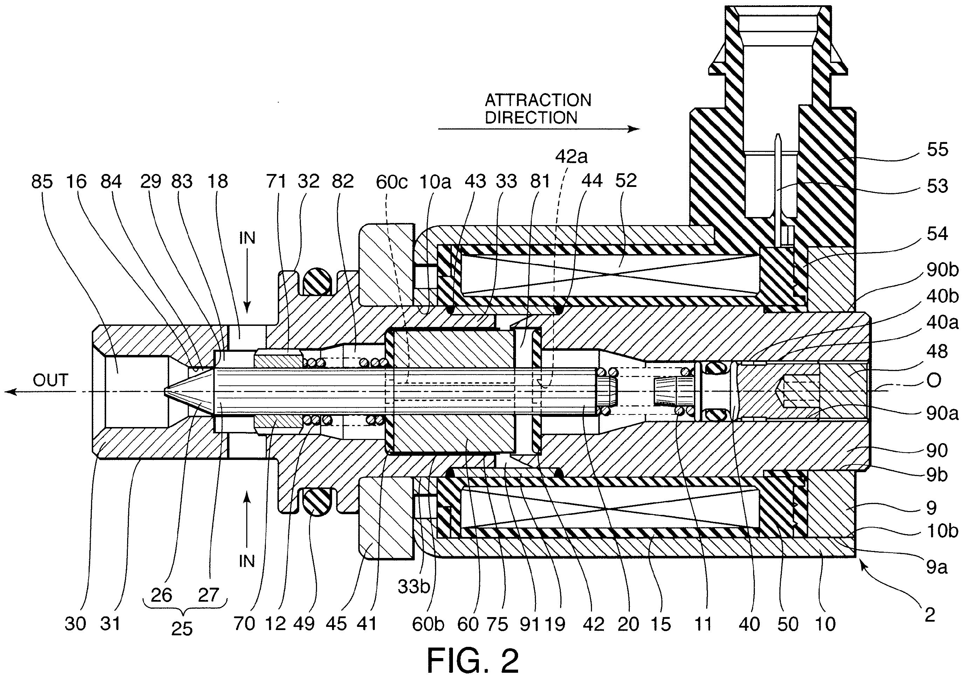

Referring to FIG. 2, the proportional electromagnetic flow control valve 2 comprises a sleeve 30 in which a working oil flow path is formed, a shaft 20 supported in the sleeve 30 in a state where it can displace in a direction of a center axis O thereof, a movable iron core 60 that is fixed onto the outer circumference of the shaft 20, a first spring 11 and a second spring that resiliently support the shaft 20 in opposite directions along the center axis O, and a solenoid 15.

A valve body 25 constitutes a front tip of the shaft 20 and varies a cross-sectional area of the flow path of the working oil in accordance with an axial displacement of the shaft 20.

The solenoid 15 comprises a coil bobbin 50 made of resin, a coil 52 wound onto the coil bobbin 50, a coil case 10 for accommodating the coil 52, and a fixed iron core 90 fixed on an inner side of the coil bobbin 50 so as to drive the movable iron core 60 in the direction along the center axis O in accordance with a power current supply to the coil 52.

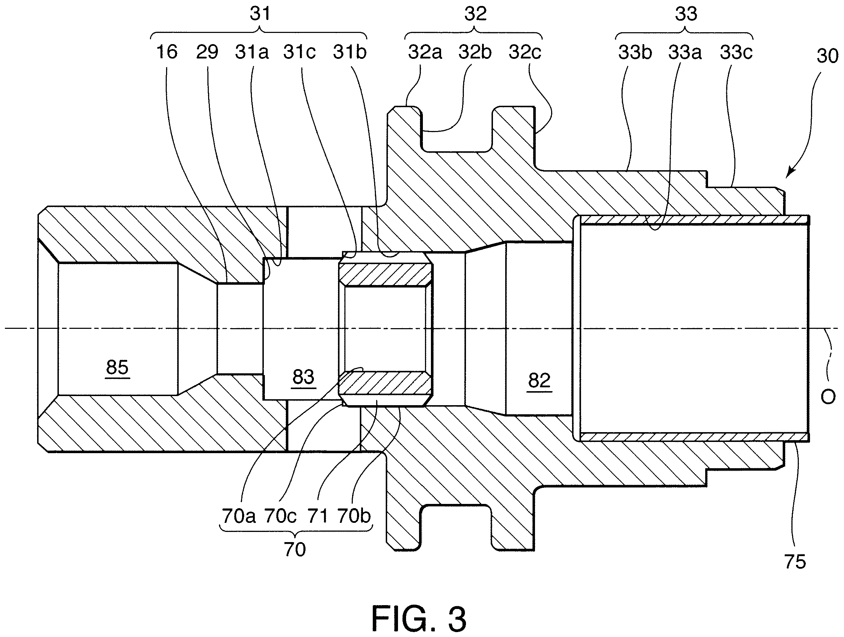

Referring to FIG. 3, the sleeve 30 comprises a sleeve passage forming part 31, a sleeve large diameter part 32, and a sleeve magnetic path forming part 33.

Referring again to FIG. 2, the coil bobbin 50 is formed into a cylindrical shape and accommodated in the coil case 10. The fixed iron core 90 is fixed in the coil bobbin 50. The sleeve 30 is inserted into the bobbin 50 via an opening of the coil case 10 formed on the opposite side of the coil case 10 to the fixed iron core 90 such that a large diameter outer circumferential surface 33b of the sleeve magnetic path forming part 33 is fitted into an inner circumferential surface 10a of the coil case 10.

A ring-shaped end plate 9 is fixed onto an outer circumference of a base of the fixed iron core 90 located on the opposite side of the fixed iron core 90 to the movable iron core 60. An outer circumferential surface 9a of the ring-shaped end plate 9 is fitted into an inner circumferential surface 10b of another opening of the coil case 10. An inner circumferential surface 9b of the ring-shaped end plate 9, is fixed onto an outer circumferential surface 90b of the fixed iron core 90 by applying knurl press fitting.

A molding resin 54 is filled into a gap formed between the coil case 10 and the coil 52 and a gap between the ring-shaped end plate 9 and the coil bobbin 50. Further, a receptacle 55 for accommodating a terminal 53 of the coil 52 is formed by the molding resin 54.

A resin material having a higher melt point than a material used for the coil bobbin 50 is used as a material for the molding resin 54. The molding resin 54 is fusion bonded to the coil bobbin 50 during a molding process. The molding resin 54 seals the coil 52 so as to insulate the solenoid 15 and make the solenoid 15 water resistant.

Lead wires are connected to the terminal 53 via a plug that is inserted into a receptacle 55. The coil 52 is magnetized by power supplied via the lead wire and the terminal 53.

The sleeve 30 is constructed from a magnetic material so as to serve as as a member constituting a magnetic path of the solenoid 15. The sleeve 30 is disposed coaxially with the fixed iron core 90 while forming a magnetic gap 91 there-between.

A cylindrical filler ring 19 is fitted onto an outer circumference of the sleeve 30 and the outer circumference of the fixed iron core 90 so as to cover the magnetic gap 91. An end of the filler ring 19 is fixed to the sleeve 30 via a laser welding part 43. Another end of the filler ring 19 is fixed to the outer circumference of the fixed iron core 90 via a laser welding part 44. The sleeve 30 and the fixed iron core 90 are thus connected with each other via the filler ring 19.

The solenoid 15 is magnetized by power supplied to the coil 52. The magnetized solenoid 15 forms a magnetic path constituted by the coil case 10, the sleeve 30, the movable iron core 60, the fixed iron core 90, and the ring-shaped end plate 9.

Providing that a part of the sleeve 30 near the fixed iron core 90 is referred to as a rear part of the sleeve 30 and a part of the sleeve 30 that is distant from the fixed iron core 90 is referred to as a front part of the sleeve 30, the sleeve passage forming part 31 corresponds to the front part of the sleeve 30 and the sleeve magnetic path forming part 33 corresponds to the rear part of the sleeve 30.

The sleeve passage forming part 31 is fitted in a pump body of the hydraulic pump 3. To fix the proportional electromagnetic flow control valve 2 onto the pump body, the sleeve large diameter part 32 is formed on the outer circumference of the sleeve 30 between the sleeve passage forming part 31 and the sleeve magnetic path forming part 33. The sleeve large diameter part 32 projects outward like a flange.

Referring again to FIG. 3, the sleeve large diameter part 32 comprises an outer circumferential surface 32a that is fitted to an opening formed in the pump body and an annular groove 32b formed in the outer circumferential surface 32a. A ring-shaped seal member 49 shown in FIG. 2 is fitted into the annular groove 32b so as to make the sleeve 30 tightly fitted to the opening of the pump body. The proportional electromagnetic flow control valve 2 is fixed to the pump body in a state where the sleeve passage forming part 31 of the sleeve 30 is inserted into the pump body while the sleeve large diameter part 32 is fitted to the opening of the pump body.

The sleeve magnetic path forming part 33 functions to form a part of the magnetic path of the solenoid 15. The sleeve magnetic path forming part 33 is formed into a cylindrical shape and comprises a step, an inner circumferential surface 33a enclosing the movable iron core 60, the large diameter outer circumferential surface 33b fitted into the coil bobbin 50 and the coil case 10, and a small diameter outer circumferential surface 33c covered by the filler ring 19.

A circular plate 45 is fitted onto the large diameter outer circumferential surface 33b of the sleeve 30 by way of a light press fit and gripped between the coil case 10 and an end face 32c formed between the outer circumferential surface 32a and the large diameter outer circumferential surface 33b.

Referring again to FIG. 2, the movable iron core 60 comprises a cylindrical outer circumferential surface 60b. The outer circumferential surface 60b is supported by a second bearing 75 formed on the inner circumferential surface 33a of the sleeve 30 in a state so as to be free to slide in the direction of the center axis O. The movable iron core 60 divides a space formed in the sleeve 30 and the fixed iron core 90 into a front chamber 82 and a rear chamber 81. A communication hole 60c permanently connecting the front chamber 82 and the rear chamber 81 is formed through the movable iron core 60 in the direction of the center axis O on the outside of the shaft 20.

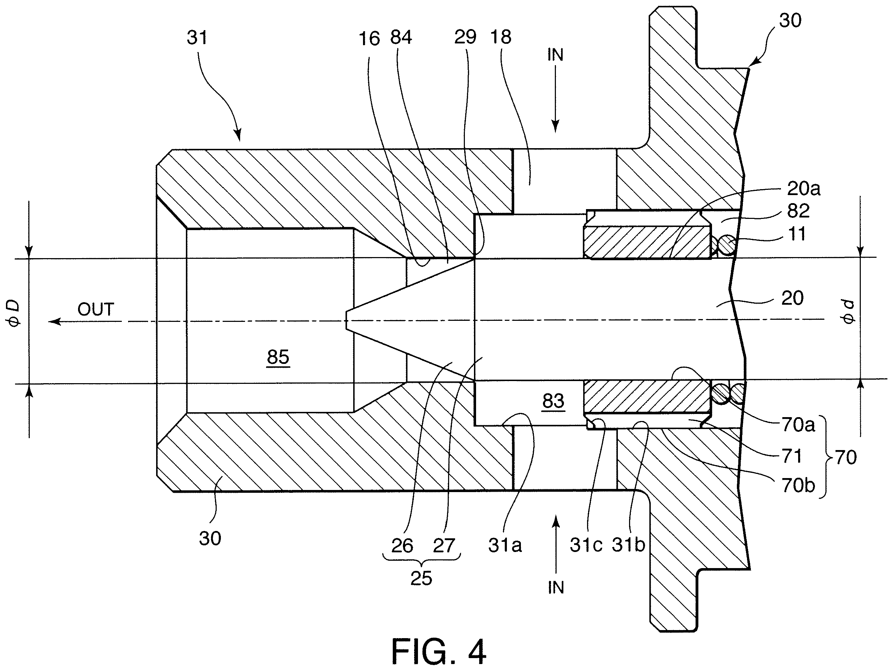

Referring to FIG. 4, the shaft 20 comprises a cylindrical outer circumferential surface 20a. The outer circumferential surface 20a is supported by a first bearing 70 fixed to the inner circumferential surface of the sleeve 30 so as to be free to slide along the center axis O.

The first bearing 70 comprises a bearing surface 70a that supports the outer circumferential surface 20a of the shaft 20, an outer circumferential surface 70b, and outer circumferential grooves 71 formed in the outer circumferential surface 70b in the direction of the center axis O.

The sleeve passage forming part 31 has a working oil flow path on the inside thereof.

The sleeve passage forming part 31 comprises a cylindrical valve outlet chamber 85 having an opening towards the pump body, a valve outlet port 16 that is formed continuously with the valve outlet chamber 85 but with a smaller diameter, a valve inlet port 18 having plural openings on a side face of the sleeve passage forming part 31, and a valve chamber 83 that connects the valve inlet port 18 and the valve outlet port 16.

The valve body 25 formed in the front tip of the shaft 20 is constituted by a columnar part 27 and a conical part 26 forming a front tip of the shaft 20. The valve body 25 passes through the valve chamber 83 and penetrates the annular seat portion 29 formed in the valve outlet port 16 while maintaining a minute gap there-between.

Referring again to FIG. 2, the first bearing 70 supports the shaft 20 between the movable iron core 60 and the annular seat portion 29. The front chamber 82 located between the first bearing 70 and the movable iron core 60 and the valve chamber 83 located between the first bearing 70 and the annular seat portion 29 are permanently connected to each other via the outer circumferential grooves 71 formed on the outer circumference of the first bearing 70.

According to the construction described above, as the shaft 20 displaces along the center axis O together with the movable iron core 60, working oil displaces between the valve chamber 83 and the front chamber 82 via the communication hole 60c.

A sliding space of the movable iron core 60 formed in the sleeve 30 and the fixed iron core 90 is limited by an annular step formed on the inner circumference of the sleeve 30 and an annular step formed on the inner circumference of the fixed iron core 90, respectively. These annular steps constitute a limiting member for limiting displacement of the movable iron core 60.

The first spring 11 is formed in a coil-shape and gripped between a rear face of the shaft 20 and an adjuster bolt 40 in a compressed state. The first spring 11 biases the shaft 20 together with the movable iron core 60 leftward in the figure.

A first gap washer 41 is pressed against a front face of the movable iron core 60 facing the front chamber 82 by the second spring 12.

The second spring 12 is formed in a coil-shape and supported by the first bearing 70 so as to bias the movable iron core 60 and the shaft 20 in a rightward direction in the figure, via the first gap washer 41.

Displacement of the shaft 20 and the movable iron core 60 of the leftward direction in the figure is limited in a position where the first gap washer 41 contacts the annular step formed on the inner side of the sleeve 30. The communication hole 60c is formed through the first gap washer 41 as well as through the movable iron core 60 so as to connect the front chamber 82 and the rear chamber 81 permanently.

A second gap washer 42 is fitted to the annular step formed in the fixed iron core 90. A communication hole 42a is formed through the second gap washer 42 so as to connect the rear chamber 81 and a space behind the shaft 20 permanently. As the shaft 20 and the movable iron core 60 displace in the rightward direction of the figure, a rear face of the movable iron core 60 comes into contact with the second gap washer 42 so as to limit further displacement of the movable iron core 60.

The first gap washer 41 and the second gap washer 42 are constituted by a disk-shaped member formed from a non-magnetic resin. The shaft 20 passes through a center portion of the first gap washer 41 and the second gap washer 42.

The upstream pressure *P1* of the proportional electromagnetic flow control valve 2 shown in FIG. 1 corresponds to a pressure in the valve inlet port 18, and the downstream pressure *P2* of the proportional electromagnetic flow control valve 2 shown in FIG. 1 corresponds to a pressure in the valve outlet port 16.

The pressure in the valve inlet port 18 acts on the rear face of the shaft 20 via the outer circumferential grooves 71 of the first bearing 70, the front chamber 82, the communication hole 60c, the rear chamber 81, and the communication hole 42a. The pressure in the valve outlet port 16 acts on the valve body 25 in the opposite direction.

The pressure in the valve inlet port 18 and a spring force of the first spring 11 acts on the shaft 20 in the leftward direction in FIG. 2, which is a direction for decreasing working oil flowing from the valve inlet port 18 to the valve outlet port 16. The pressure in the valve outlet port 16 and a spring force of the second spring 12 acts on the shaft 20 in the rightward direction in FIG. 2, which is a direction for increasing working oil flowing from the valve inlet port 18 to the valve outlet port 16. In the description below, the former direction is referred to as a valve opening direction and the latter direction is referred to as a valve closing direction.

FIG. 2 shows a position of the shaft 20 and the movable iron core 60 in a state where the solenoid 15 is not magnetized. In this state, as shown in the figure, the first gap washer 41 is in contact with the annular step formed in the sleeve 30, and the shaft 20 and the movable iron core 60 are located in a limiting position towards the valve closing direction. Herein, the columnar part 27 of the valve body 25 faces the annular seat portion 29 and the flow rate of the proportional electromagnetic flow control valve 2 is maintained at a minimum flow rate. The position of the shaft 20 and the movable iron core 60 in this state is referred to as a minimum flow rate position in the description below.

When power is supplied to the coil 52 to magnetize the solenoid 15, a magnetic path formed by the magnetized solenoid 15 causes the movable iron core 60 together with the shaft 20 to displace in the valve opening direction from the minimum flow rate position against the pressure in the valve inlet port 18 and the spring force of the first spring 11, as shown by an arrow in the figure. Owing to the spring force of the second spring 12, the solenoid 15 can cause the movable iron core 60 to displace in the valve opening direction with a small thrusting force. As a magnetizing current of the solenoid 15 increases, the movable iron core 60 moves further rightward in the figure.

A thrusting force *Fsol* of the solenoid 15 required to lift the movable iron core 60 together with the shaft 20 from the minimum flow rate position for a distance *Xs* in the valve opening direction is represented by a relation (1) below:

$$Fsol = Ff + \Delta P \cdot As + (Fk1 - Fk2) + (k1 + k2) \cdot Xs \quad (1)$$

where,

*Ff* = dynamic force of working oil flowing through an annular gap formed between the valve body 25 and the annular seat portion 29;

*ΔP* = differential pressure between upstream and downstream of proportional electromagnetic flow control valve 2 = *P1 - P2*;

*As* = cross-sectional area of columnar part 27 of shaft 20;

*Fk1* = spring force of first spring 11 in minimum flow rate position;

*Fk2* = spring force of second spring 12 in minimum flow rate position;

*k1* = spring constant of first spring 11; and

*k2* = spring constant of second spring 12.

As can be understood from the relation (1), the spring force *Fk2* of the second spring 12 and the thrusting force *Fsol* of the solenoid 15 act on the shaft 20 in the valve opening direction. A force *ΔP. As*, which is caused by the differential pressure *ΔP* between the upstream and downstream pressures *P1, P2* of the proportional electromagnetic flow control valve 2, the dynamic force *Ff* exerted on the shaft 20 by the working oil, and the spring force *Fk1* of the first spring 11 act on the shaft 20 in the valve closing direction. The movable iron core 60 and the shaft 20 are kept in a position in which these forces balance. A flow rate *Q* of the proportional electromagnetic flow control valve 2 in this position is proportional to a cross-sectional area *Av* of the annular gap and the differential pressure *ΔP* of the upstream and downstream pressures *P1, P2*.

The adjuster bolt 40 supporting the second spring 12 is screwed into the fixed iron core 90. By adjusting a screwed position of the adjuster bolt 40 into the fixed iron core 90, the spring forces of the first spring 11 and the second spring 12 exerted on the shaft 20 can be adjusted in advance.

The adjuster bolt 40 comprises a threaded part 40a and an enlarged diameter part 40b which is formed in a base of the threaded part 40a. The threaded part 40a is screwed into a screw hole 90a formed in the fixed iron core 90.

The adjuster bolt 40 is screwed into the fixed iron core 90 from the left side of the fixed iron core 90 in FIG. 2. As the threaded part 40a reaches a deepest portion of the screw hole 90a of the fixed iron core 90, the enlarged diameter part 40b comes into contact with a tip of the screw hole 90a such that the adjuster bolt 40 is prevented from invading the screw hole 90a further. This arrangement also prevents the adjuster bolt 40 from falling off the fixed iron core 90.

After adjusting the spring forces of the first spring 11 and the second spring 12 by modifying the screwed position of the adjuster bolt 40, a sealing agent 48 is applied to the screw hole 90a facing the rear face of the adjuster bolt 40. The sealing agent 48, when it is set, functions as a lock to prevent the adjuster bolt 40 from rotating.

The second bearing 75 is constructed from a non-magnetic resin. Specifically, the second bearing 75 is a sheet member of polytetrafluoroethylene (PTFE) pasted onto the inner circumferential surface 33a of the sleeve magnetic path forming part 33 to form a cylindrical shape.

The second bearing 75 made of a non-magnetic resin sheet supports the movable iron core 60 on the inner circumferential surface 33a of the sleeve magnetic path forming part 33 in a state where the movable iron core can slide along the center axis O.

Working oil discharged by the hydraulic pump 3 is supplied to the power cylinder 7 via the valve inlet port 18, the valve chamber 83, a variable throttle 84 formed by the annular gap between the annular seat portion 29 and the valve body 25, the valve outlet port 16, and the valve outlet chamber 85 of the proportional electromagnetic flow control valve 2

The valve inlet port 18 is formed in the form of three flow paths each having a circular cross-section, and traversing the passage forming part 31 while intersecting with the center axis O. In other words, the valve inlet port 18 comprises six sub-ports each having an opening in a radial direction that are formed in the sleeve passage forming part 31 at angular intervals of sixty degrees. The number of the sub-ports need not be limited to six, and may range from unity to any plural numbers.

Referring again to FIG. 3, the valve chamber 83 is formed inside a small diameter inner circumferential surface 31a of the sleeve passage forming part 31. The valve chamber 83 is formed to have a smaller diameter than the front chamber 82 while having a greater diameter than the valve outlet port 16. The valve inlet port 18 communicates permanently with the valve chamber 83. The valve outlet port 16 communicates with the valve chamber 83 via the annular gap formed between the annular seat portion 29 and the valve body 25.

Referring again to FIG. 2, the valve chamber 83, the valve outlet port 16, the annular seat portion 29, and the valve outlet chamber 85 are disposed coaxially on the center axis O.

An outer diameter d of the columnar part 27 of the valve body 25 is set to be marginally smaller than an inner diameter D of the valve outlet port 16.

The proportional electromagnetic flow control valve 2 takes a minimum valve opening in a state where the columnar part 27 invades the annular seat portion 29. The cross-sectional area *Av* of the annular gap, or in other words an opening area of the variable throttle 84 in the minimum valve opening is represented by the relation (2) below:

$$Av = (\pi / 4) \cdot (D^2 - d^2) \tag{2}$$

In a displacement region of the shaft 20 where the columnar part 27 invades the annular seat portion 29, the minimum valve opening is maintained. This displacement region of the shaft 20 is referred to as a minimum opening region. The minimum opening region is nearby a most protruded position of the shaft 20 in which the shaft 20 protrudes from the first bearing 70 to a maximum extent such that the columnar part 27 of the valve body 25 invades the annular seat portion 29. When the shaft 20 is in the most protruded position from the first bearing 70, a maximum projection length $L$, which is a distance from the boundary between the conical part 26 and the columnar part 27 to a front face of the first bearing 70, is greater than a distance from the annular seat portion 29 to the front face of the first bearing 70.

Maintaining the minimum valve opening in the minimum opening region of the shaft 20 in this way is desirable to compensate for a production error with respect to a displacement end of the shaft 20 in the valve closing direction that may affects a flow path cross-sectional area $Av$ of the variable throttle 84.

A region between the minimum opening region and a maximum opening region of the shaft 20 is referred to as an opening area variable region. In the opening area variable region, the conical part 26 of the valve body 25 is located on the inner side of the annular seat portion 29 such that the opening area $Av$ of the variable throttle 84 varies according to a displacement of the valve body 25 along the center axis O.

In the minimum opening region of the proportional electromagnetic flow control valve 2, the flow rate of working oil passing through the variable throttle 84 is maintained at a minimum flow rate.

In the opening area variable region of the proportional electromagnetic flow control valve 2, the flow rate of working oil passing through the variable throttle 84 increases in a first-order proportion to the valve opening area of the variable throttle 84 such that the flow rate of working oil passing through the variable throttle 84 increases from the minimum flow rate towards a maximum flow rate.

The maximum valve opening of the proportional electromagnetic flow control valve 2 is achieved in a position where the movable iron core 60 having moved rightward in FIG. 2, is about to come into contact with the second gap washer 42. A displacement region of the shaft 20 from this position up to the point where the movable iron core 60 comes into contact with the second gap washer 42 is referred to as the maximum opening region.

Thus, the proportional electromagnetic flow control valve 2 causes working oil to flow from the valve inlet port 18 to the valve outlet port 16 at a flow rate defined by the displacement position of the shaft 20.

Referring again to FIG. 4, in this proportional electromagnetic flow control valve 2, the maximum projection length $L$ of the valve body 25 from the first bearing 70 is set to be no greater than 1.5 times the outer diameter d of the columnar part 27 of the shaft 20. The projection length of the valve body 25 from the first bearing 70 is represented by the distance from the boundary between the conical part 26 and the columnar part 27 to the front face of the first bearing 70, as described above.

According to experiments performed by the inventors, this setting is preferable to maintain a concentricity of the valve body 25 with the annular seat portion 29 under working oil pressure acting on the valve body 25 when the shaft 20 displaces.

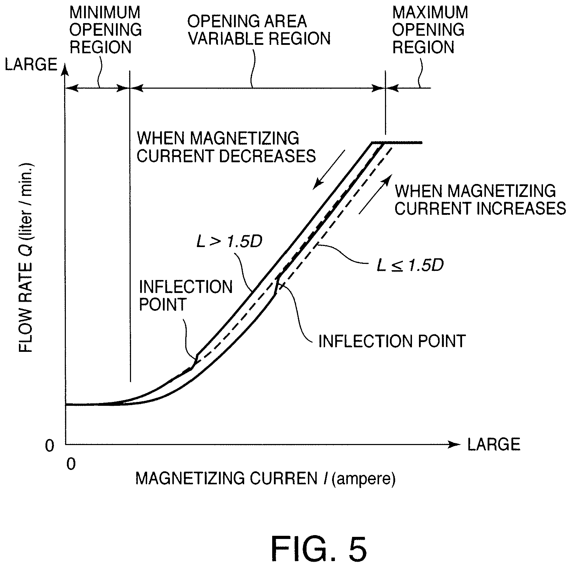

Referring to FIG. 5, in this proportional electromagnetic flow control valve 2 in which the maximum projection length $L$ of the shaft 20 is set to be no greater than 1.5 times the outer diameter $d$ of the shaft 20, the relation between a magnetizing current $I$ supplied to the coil 52 and a flow rate $Q$ of the proportional electromagnetic flow control valve 2 is represented by a broken line. Specifically, in the minimum opening region, the flow rate $Q$ is maintained at a substantially constant value irrespective of an increase/ decrease of the magnetizing current $I$. In the opening area variable region, the flow rate $Q$ increases as the magnetizing current $I$ increases. In the maximum opening region, the flow rate $Q$ is maintained at a substantially constant value irrespective of an increase/decrease of the magnetizing current $I$.

In contrast, a solid line in the figure denotes a characteristic of the proportional electromagnetic flow control valve 2 when the maximum projection length $L$ of the valve body 25 is set to be greater than 1.5 times the outer diameter $d$ of the shaft 20.

In the characteristic shown by the solid line, it is noted that the flow rate $Q$ shows a rapid increase at a certain point with respect to an increase in the magnetizing current $I$. This point is referred to as an inflection point. The inflection point is considered to appear when a dynamic force of the working oil flowing through the variable throttle 84, which is exerted on the valve body 25 during displacement of the shaft 20, brings about a bending deformation of the shaft 20.

The bending deformation of the shaft 20 impairs the concentricity of the valve body 25 with the annular seat portion 29, thereby causing a fluctuation in the flow rate characteristic of the proportional electromagnetic flow control valve 2. When a fluctuation occurs in the flow rate characteristic of the proportional electromagnetic flow control valve 2, the precision of flow rate control is adversely affected. To prevent the inflection point from appearing, the maximum projection length $L$ of the valve body 25 should be kept no greater than 1.5 times the outer diameter $d$ of the columnar part 27.

Referring again to FIG. 4, to fulfill the above requirement, the first bearing 70 is disposed close to the annular seat portion 29 such that the opening of the valve inlet port 18 is partially covered by the first bearing 70. According to this arrangement of the first bearing 70, the maximum projection length $L$ of the valve body 25 can be set within 1.5d without reducing the diameter of the valve inlet port 18. It should be noted that in the part of the opening of the valve inlet port 18 that is covered by the first bearing 70, a flow of working oil is still formed through the outer circumferential grooves 71.

Referring again to FIG. 3, the sleeve 30 comprises a large diameter inner circumferential surface 31b that abuts the small diameter inner circumferential surface 31a. An annular sleeve step part 31c is formed between the small diameter inner circumferential surface 31a and the large diameter inner circumferential surface 31b.

The first bearing 70 is fixed to the sleeve 30 by press fitting the outer circumferential surface 70b into the large diameter inner circumferential surface 31b. The first bearing 70 is prevented from approaching the annular seat portion 29 by fitting the first bearing 70 in the sleeve 30 such that a front face 70c of the first bearing 70 comes into contact with the sleeve step part 31c. Providing the sleeve step part 31 to prevent the first bearing 70 from moving towards the annular seat portion 29 prevents a problem arising when the valve inlet port 18 is closed by the first bearing 70 or the maximum projection length *L* of the valve body 25 is varied due to a displacement of the first bearing 70. This sleeve step part 31c constitutes a displacement preventing member of the first bearing 70 that prevents the first bearing 70 from displacing towards the annular seat portion 29.

As described above, the proportional electromagnetic flow control valve 2 according to this invention comprises the first bearing 70 that supports the shaft 20 between the movable iron core 60 and the annular seat portion 29 and the second bearing 75 that supports the movable iron core 60. By providing the first bearing 70 detached from the second bearing 75, the maximum projection length *L* of the valve body 25 from the first bearing 70 can be made shorter. Accordingly, supporting stiffness of the valve body 25 is enhanced, and the concentricity of the valve body 25 with the annular seat portion 29 can be maintained securely. The proportional electromagnetic flow control valve 2 therefore exhibits a stable flow rate characteristic related to the magnetizing current *I* of the solenoid 15.

Further, by setting the maximum projection length *L* of the valve body 25 from the first bearing 70 at not greater than 1.5 times the diameter *d* of the shaft 20, the concentricity of the valve body 25 with the annular seat portion 29 is further enhanced.

According to this invention, therefore, a rapid increase in the flow rate *Q* at a certain valve opening with respect to an increase in the magnetizing current *I,* or in other words an inflection point is not likely to appear in the flow rate characteristic and precise flow rate control can be performed.

Although the invention has been described above with reference to certain embodiments, the invention is not limited to the embodiments described above. Modifications and variations of the embodiments described above will occur to those skilled in the art, within the scope of the claims.

For example, in the embodiment described above, the proportional electromagnetic flow control valve is applied to a vehicle power steering device, but this invention brings about a preferable effect when applied to a proportional electromagnetic flow control valve in various industrial vehicles.

The embodiments of this invention in which an exclusive property or privilege is claimed are defined as follows:

## Claims

1. A proportional electromagnetic flow control valve (2) that regulates a flow rate of working fluid in accordance with a magnetic force generated by a solenoid (15), comprising:

   a sleeve (30);
   a movable iron core (60) that displaces in an axial direction with respect to the sleeve (30) in accordance with the magnetic force;
   a shaft (20) that displaces together with the movable iron core (60);
   a valve body (25) formed on the shaft (20);
   a seat portion (29) that allows the valve body (25) to invade such that an annular gap through which the working fluid flows is formed there-between, a cross-sectional area (Av) of the annular gap being varied according to a displacement position of the shaft (20);
   a first bearing (70) that supports the shaft (20) in the sleeve (30) between the movable iron core (60) and the seat portion (29);
   a valve chamber (83) formed in the sleeve (30) between the first bearing (70) and the seat portion (29) to supply working fluid to the annular gap,
   a second bearing (75) supporting the movable iron core (60) in a position detached from the first bearing (70), wherein
   the second bearing (75) is a sheet member of non-magnetic resin pasted onto an inner circumferential surface (33a) of the sleeve (30) to form a cylindrical shape,
   **characterized in that**
   the sleeve (30) comprises a valve inlet port (18) that introduces working fluid into the valve chamber (83), a valve outlet port (16) that surrounds the valve body (25) in a position downstream of the seat portion (29) so as to allow working fluid that has passed the annular gap to flow out from the valve chamber (83), a small diameter inner circumferential surface (31a) forming the valve chamber (83), and a large diameter inner circumferential surface (31b) formed next to the small diameter inner circumferential surface (31a) via an annular sleeve step part (31c),

the first bearing (70) is fixed to the large diameter inner circumferential surface (31b) in contact with the annular sleeve step part (31c), and

the valve inlet port (18) is formed to extend over the small diameter inner circumferential surface (31a) and the large diameter inner circumferential surface (31b).

2. The proportional electromagnetic flow control valve (2) as defined in Claim 1, wherein the valve body (25) comprises a columnar part (27) that is continuous with the shaft (20) and a conical part (26) that gradually decreases in a diameter from the columnar part (27), and a maximum value (L) of a projection length of the valve body (25) from the first bearing (70) is set to be no greater than 1.5 times a diameter (d) of the columnar part (27).

3. The proportional electromagnetic flow control valve (2) as defined in Claim 2, wherein the first bearing (70) comprises a front face (70c) facing the valve chamber (83), and the projection length is represented by a distance from a boundary between the columnar part (27) and conical part (26) to the front face (70c) of the first bearing (70).

4. The proportional electromagnetic flow control valve (2) as defined in Claim 1, wherein the shaft (20) comprises an outer circumferential surface (70b) and a center axis (O), and the first bearing (71) is configured to cover a part of an opening of the valve inlet port (18) onto the valve chamber (83) and have an outer circumferential surface (70b) in which an outer circumferential groove (71) is formed in a direction along the center axis (O).

5. The proportional electromagnetic flow control valve (2) as defined in Claim 4, further comprising a limiting member that prevents the movable iron core (60) from displacing beyond a predetermined position, wherein the projection length takes a maximum value (L) when the movable iron core (60) is in the predetermined position.

6. The proportional electromagnetic flow control valve (2) as defined in Claim 4 or Claim 5, wherein the valve body (25) is provided at an end of the shaft (20), the shaft (20) comprises a rear end face at another end thereof, and the proportional electromagnetic flow control valve (2) further comprises a passage (71, 82, 60c, 81, 42a) that applies a working fluid pressure in the valve inlet port (18) to the rear end face of the shaft (20).

7. The proportional electromagnetic flow control valve (2) as defined in any one of Claim 1 through Claim 6, wherein the solenoid (15) is configured to drive the shaft (30), when magnetized, in a direction to increase the cross-sectional area (Av) of the annular gap via the movable iron core (60).

8. The proportional electromagnetic flow control valve (2) as defined in Claim 7, further comprising a first spring (11) that biases the shaft (20) towards a direction for decreasing the cross-sectional area (Av) of the annular gap and a second spring (12) that biases the shaft (20) towards a direction for increasing the cross-sectional area (Av) of the annular gap, wherein the solenoid (15) is configured to drive the movable iron core (60) and the shaft (20), when magnetized, in the direction for increasing the cross-sectional area (Av) of the annular gap.

9. The proportional electromagnetic flow control valve (2) as defined in Claim 8, further comprising an adjuster bolt (40) that adjusts spring forces of the first spring (11) and the second spring (12), wherein the solenoid (15) comprises a fixed iron core (90), and the adjuster bolt (40) comprises a threaded part (40a) that is screwed into the fixed iron core (90) and an enlarged diameter part (40b) that has a greater diameter than the threaded part (40a) to prevent the adjuster bolt (40) from falling off the fixed iron core (90).

10. The proportional electromagnetic flow control valve (2) as defined in Claim 3, wherein the maximum value (L) of the projection length is set to be longer than a distance between the seat portion (29) and the end face of the first bearing (70).

11. The proportional electromagnetic flow control valve (2) as defined in any one of Claim 1 through Claim 10, wherein the solenoid (15) comprises: a coil bobbin (50) made of resin, a coil (52) wound onto the coil bobbin (50), a coil case (10) that accommodates the coil (52), and a molding resin (54) that is filled between the coil case (10) and the coil (52), and the molding resin (54) is formed by molding a resin that has a higher melt point than a constituent material of the coil bobbin (50) and is fusion bonded to the coil bobbin (50).

**12.** The proportional electromagnetic flow control valve (2) as defined in any one of Claim 1 through Claim 11, further comprising a member (31c) that prevents the first bearing (70) from displacing towards the seat portion (29).

**Patentansprüche**

**1.** Proportionales elektromagnetisches Strömungssteuerventil (2), das eine Strömungsrate des Arbeitsfluids in Übereinstimmung mit einer magnetischen Kraft reguliert, die durch ein Solenoid (15) erzeugt wird, umfassend:

eine Hülse (30);
einen beweglichen Eisenkern (60), der sich in axialer Richtung in Bezug auf die Hülse (30) in Übereinstimmung mit der Magnetkraft verschiebt;
eine Welle (20), die sich zusammen mit dem beweglichen Eisenkern (60) verschiebt;
einen auf der Welle (20) ausgebildeten Ventilkörper (25);
einen Sitzabschnitt (29), der es ermöglicht, dass der Ventilkörper (25)'derart eindringt, dass ein ringförmiger Spalt, durch den das Arbeitsfluid strömt, dazwischen ausgebildet wird, wobei eine Querschnittsfläche (Av) des ringförmigen Spalts gemäß einer Verschiebeposition der Welle (20) verändert wird;
ein erstes Lager (70), das die Welle (20) in der Hülse (30) zwischen dem beweglichen Eisenkern (60) und dem Sitzabschnitt (29) hält;
eine Ventilkammer (83), die in der Hülse (30) zwischen dem ersten Lager (70) und dem Sitzabschnitt (29) ausgebildet ist, um Arbeitsfluid dem ringförmigen Spalt zuzuführen,
ein zweites Lager (75), das den beweglichen Eisenkern (60) in einer Position hält, die von dem ersten Lager (70) gelöst ist, wobei
das zweite Lager (75) ein Blattelement aus nichtmagnetischem Harz ist, das auf eine Innenumfangsfläche (33a) der Hülse (30) aufgeklebt ist, um eine zylindrische Form auszubilden, **dadurch gekennzeichnet, dass**
die Hülse (30) umfasst: einen Ventileinlassanschluss (18), der Arbeitsfluid in die Ventilkammer (83) einführt, einen Ventilauslassanschluss (16), der den Ventilkörper (25) in einer Position stromabwärts des Sitzabschnitts (29) derart umgibt, dass Arbeitsfluid, das den ringförmigen Spalt passiert hat, aus der Ventilkammer (83) herausströmen kann, eine Innenumfangsfläche (31a) mit kleinem Durchmesser, die die Ventilkammer (83) ausbildet, und eine Innenumfangsfläche (31b) mit großem Durchmesser, die in der Nähe der Innenumfangsfläche (31a) mit kleinem Durchmesser über einen ringförmigen Hülsenstufenteil (31c) ausgebildet ist,
das erste Lager (70) an der Innenumfangsfläche (31b) mit großem Durchmesser in Kontakt mit dem ringförmigen Hülsenstufenteil (31c) befestigt ist, und
der Ventileinlassanschluss (18) derart ausgebildet ist, dass er sich über die Innenumfangsfläche (31a) mit kleinem Durchmesser und die Innenumfangsfläche (31b) mit großem Durchmesser erstreckt.

**2.** Proportionales elektromagnetisches Strömungssteuerventil (2) nach Anspruch 1, bei dem der Ventilkörper (25) einen säulenförmigen Teil (27), der an die Welle (20) anschließt und einen konischen Teil (26) umfasst, der in einem Durchmesser von dem säulenförmigen Teil (27) allmählich abnimmt und ein maximaler Wert (L) einer Projektionslänge des Ventilkörpers (25) von dem ersten Lager (70) nicht größer als das 1,5-Fache des Durchmessers (d) des säulenförmigen Teils (27) eingestellt ist.

**3.** Proportionales elektromagnetisches Strömungssteuerventil (2) nach Anspruch 2, bei dem das erste Lager (70) eine der Ventilkammer (83) zugewandte Vorderseite (70c) aufweist und die Projektionslänge durch einen Abstand von einer Grenze zwischen dem säulenförmigen Teil (27) und dem konischen Teil (26) zur Vorderseite (70c) des ersten Lagers (70) dargestellt ist.

**4.** Proportionales elektromagnetisches Strömungssteuerventil (2) nach Anspruch 1, bei dem die Welle (20) eine Außenumfangsfläche (70b) und eine Mittelachse (O) aufweist und das erste Lager (71) dazu eingerichtet ist, einen Teil einer Öffnung des Ventileinlassanschlusses (18) auf die Ventilkammer (83) abzudecken, und eine Außenumfangsfläche (70b) aufweist, in der eine Außenumfangsnut (71) in einer Richtung entlang der Mittelachse (O) ausgebildet ist.

**5.** Proportionales elektromagnetisches Strömungssteuerventil (2) nach Anspruch 4, weiterhin umfassend ein Begrenzungselement, das verhindert, dass sich der bewegliche Eisenkern (60) über eine vorbestimmte Position hinaus verschiebt, wobei die Projektionslänge einen Maximalwert (L) annimmt, wenn sich der bewegliche Eisenkern (60) in der vorbestimmten Position befindet.

**6.** Proportionales elektromagnetisches Strömungssteuerventil (2) nach Anspruch 4 oder 5, bei dem der Ventilkörper (25) an einem Ende der Welle (20) vorgesehen ist, die Welle (20) eine hintere Stirnfläche an ihrem anderen Ende aufweist und das proportionale elektromagnetische Strömungssteuerventil (2) weiterhin einen Durchgang (71, 82, 60c, 81, 42a) aufweist, der einen Arbeitsfluiddruck in dem Ventileinlassanschluss (18) auf die hintere Stirnfläche der Welle (20) ausübt.

**7.** Proportionales elektromagnetisches Strömungssteuerventil (2) nach einem der Ansprüche 1 bis 6, bei dem das Solenoid (15) dazu eingerichtet ist, die Welle (30) bei Magnetisierung in einer Richtung der Vergrößerung der Querschnittsfläche (Av) des ringförmigen Spaltes über den beweglichen Eisenkern (60) anzutreiben.

**8.** Proportionales elektromagnetisches Strömungssteuerventil (2) nach Anspruch 7, weiterhin umfassend eine erste Feder (11), die die Welle (20) in Richtung einer Verringerung der Querschnittsfläche (Av) des ringförmigen Spaltes vorspannt, und eine zweite Feder (12), die die Welle (20) in Richtung der Vergrößerung der Querschnittsfläche (Av) des ringförmigen Spaltes vorspannt, wobei das Solenoid (15) so konfiguriert ist, dass es den beweglichen Eisenkern (60) und die Welle (20) bei der Magnetisierung in Richtung der Erhöhung der Querschnittsfläche (Av) des Ringspalts antreibt.

**9.** Proportionales elektromagnetisches Strömungssteuerventil (2) nach Anspruch 8, weiterhin umfassend einen Einstellbolzen (40), der Federkräfte der ersten Feder (11) und der zweiten Feder (12) einstellt, wobei das Solenoid (15) einen feststehenden Eisenkern (90) umfasst und der Einstellbolzen (40) einen in den feststehenden Eisenkern (90) eingeschraubten Gewindeteil (40a) und einen vergrößerten Durchmesserteil (40b) umfasst, der einen größeren Durchmesser als der Gewindeteil (40a) hat, um zu verhindern, dass der Einstellbolzen (40) von dem feststehenden Eisenkern (90) abfällt.

**10.** Proportionales elektromagnetisches Strömungssteuerventil (2) nach Anspruch 3, bei dem der Maximalwert (L) der Projektionslänge derart festgelegt ist, dass er länger als ein Abstand zwischen dem Sitzabschnitt (29) und der Stirnfläche des ersten Lagers (70) ist.

**11.** Proportionales elektromagnetisches Strömungssteuerventil (2) nach einem der Ansprüche 1 bis 10, bei dem das Solenoid (15) umfasst: einen Spulenkörper (50) aus Harz, einen auf den Spulenkörper (50) gewickelte Spule (52), ein Spulengehäuse (10), das die Spule (52) aufnimmt, und ein zwischen Spulengehäuse (10) und Spule (52) gefülltes Gießharz (54), wobei das Gießharz (54) durch Gießen eines Harzes ausgebildet wird, das einen höheren Schmelzpunkt als ein Bestandteil des Spulenkörpers (50) aufweist und mit dem Spulenkörper (50) verschweißt ist.

**12.** Proportionales elektromagnetisches Strömungssteuerventil (2) nach einem der Ansprüche 1 bis 11, weiterhin umfassend ein Element (31c), das verhindert, dass das erste Lager (70) in Richtung des Sitzteils (29) verschoben wird.

**Revendications**

**1.** Électrovanne proportionnelle de contrôle de débit (2) qui régule un débit de fluide de travail conformément à une force magnétique générée par un solénoïde (15), comprenant :

un manchon (30) ;
un noyau de fer mobile (60) qui se déplace en direction axiale par rapport au manchon (30) conformément à la force magnétique ;
un axe (20) qui se déplace conjointement au noyau de fer mobile (60) ;
un corps de vanne (25) formé sur l'axe (20) ;
une portion de siège (29) qui permet au corps de vanne (25) d'entrer de telle sorte qu'un intervalle annulaire à travers lequel s'écoule le fluide de travail est formé entre eux, une surface transversale (Av) de l'intervalle annulaire étant modifiée en fonction d'une position de déplacement de l'axe (20) ;
un premier palier (70) qui supporte l'axe (20) dans le manchon (30) entre le noyau de fer mobile (60) et la portion de siège (29) ;
une chambre de vanne (83) formée dans le manchon (30) entre le premier palier (70) et la portion de siège (29) pour alimenter le fluide de travail dans l'intervalle annulaire,
un deuxième palier (75) qui supporte le noyau de fer mobile (60) dans une position détachée du premier palier (70), dans laquelle
le deuxième palier (75) est un élément de feuille de résine non magnétique collé sur une surface circonférentielle interne (33a) du manchon (30) pour constituer une forme cylindrique,
**caractérisée en ce que**
le manchon (30) comprend un port d'entrée de vanne (18) qui introduit un fluide de travail dans la chambre de vanne (83), un port de sortie de vanne (16) qui entoure le corps de vanne (25) dans une position en aval de la portion de siège (29) de manière à permettre au fluide de travail qui a traversé l'intervalle annulaire de sortir de la chambre de vanne (83), une surface circonférentielle interne de petit diamètre (31a) formant la chambre de vanne (83), et une surface circonférentielle interne de grand diamètre (31b) formée près de la surface circonférentielle interne de petit diamètre (31a) via une partie d'échelon de manchon annulaire (31c), le premier palier (70) est fixé à la surface circonférentielle interne de grand diamètre (31b) en contact avec la partie d'échelon de manchon annulaire (31c), et le port d'entrée de vanne (18) est formé pour s'étendre sur la surface circonférentielle interne de petit diamètre (31a) et la surface circonférentielle interne de grand diamètre (31b).

2. Électrovanne proportionnelle de contrôle de débit (2) selon la revendication 1, dans laquelle le corps de vanne (25) comprend une partie colonnaire (27) qui présente une continuité avec l'axe (20) et une partie conique (26) dont le diamètre décroît graduellement depuis la partie colonnaire (27), et une valeur maximale (L) d'une longueur de projection du corps de vanne (25) depuis le premier palier (70) est réglée pour être inférieure ou égale à 1,5 fois un diamètre (d) de la partie colonnaire (27).

3. Électrovanne proportionnelle de contrôle de débit (2) selon la revendication 2, dans laquelle le premier palier (70) comprend une face avant (70c) faisant face à la chambre de vanne (83), et la longueur de projection est représentée par une distance depuis une délimitation entre la partie colonnaire (27) et la partie conique (26) jusqu'à la face avant (70c) du premier palier (70).

4. Électrovanne proportionnelle de contrôle de débit (2) selon la revendication 1, dans laquelle l'axe (20) comprend une surface circonférentielle externe (70b) et un axe central (O), et le premier palier (71) est configuré pour couvrir une partie d'une ouverture du port d'entrée de vanne (18) sur la chambre de vanne (83) et a une surface circonférentielle externe (70b) dans laquelle une rainure circonférentielle externe (71) est formée selon la direction de l'axe central (O).

5. Électrovanne proportionnelle de contrôle de débit (2) selon la revendication 4, comprenant en outre un élément limitant qui empêche au noyau de fer mobile (60) de se déplacer au-delà d'une position prédéterminée, dans laquelle la longueur de projection adopte une valeur maximale (L) quand le noyau de fer mobile (60) se trouve à la position prédéterminée.

6. Électrovanne proportionnelle de contrôle de débit (2) selon la revendication 4 ou 5, dans laquelle le corps de vanne (25) est pourvu à une extrémité de l'axe (20), l'axe (20) comprend une face d'extrémité arrière à une autre extrémité correspondante, et l'électrovanne proportionnelle de contrôle de débit (2) comprend en outre un passage (71, 82, 60c, 81, 42a) qui applique une pression de fluide de travail dans le port d'entrée de vanne (18) à la face d'extrémité arrière de l'axe (20).

7. Électrovanne proportionnelle de contrôle de débit (2) selon l'une quelconque des revendications 1 à 6, dans laquelle le solénoïde (15) est configuré pour entraîner l'axe (30), lorsqu'il est magnétisé, dans une direction d'augmentation de la surface transversale (Av) de l'intervalle annulaire via le noyau de fer mobile (60).

8. Électrovanne proportionnelle de contrôle de débit (2) selon la revendication 7, comprenant en outre un premier ressort (11) qui pousse l'axe (20) dans une direction de réduction de la surface transversale (Av) de l'intervalle annulaire et un deuxième ressort (12) qui pousse l'axe (20) dans une direction d'augmentation de la surface transversale (Av) de l'intervalle annulaire, dans laquelle le solénoïde (15) est configuré pour entraîner le noyau de fer mobile (60) et l'axe (20), lorsqu'ils sont magnétisés, dans la direction d'augmentation de la surface transversale (Av) de l'intervalle annulaire.

9. Électrovanne proportionnelle de contrôle de débit (2) selon la revendication 8, comprenant en outre un boulon d'ajustement (40) qui ajuste des forces de ressort du premier ressort (11) et du deuxième ressort (12), dans laquelle le solénoïde (15) comprend un noyau de fer fixe (90), et le boulon d'ajustement (40) comprend une partie filetée (40a) qui est vissée dans le noyau de fer fixe (90) et une partie de diamètre agrandie (40b) dont le diamètre est supérieur à celui de la partie filetée (40a) pour éviter que le boulon d'ajustement (40) ne tombe du noyau de fer fixe (90).

**10.** Électrovanne proportionnelle de contrôle de débit (2) selon la revendication 3, dans laquelle la valeur maximale (L) de la longueur de projection est réglée pour être supérieure à la distance entre la portion de siège (29) et la face d'extrémité du premier palier (70).

**11.** Électrovanne proportionnelle de contrôle de débit (2) selon l'une quelconque des revendications 1 à 10, dans laquelle le solénoïde (15) comprend : un corps de bobine (50) constitué en résine, une bobine (52) enroulée sur le corps de bobine (50), un boîtier de bobine (10) qui reçoit la bobine (52), et une résine de moulage (54) qui est remplie entre le boîtier de bobine (10) et la bobine (52), et la résine de moulage (54) est formée par moulage d'une résine qui présente un point de fusion supérieur à celui d'un matériau constitutif du corps de bobine (50) et est collée par fusion au corps de bobine (50).

**12.** Électrovanne proportionnelle de contrôle de débit (2) selon l'une quelconque des revendications 1 à 11, comprenant en outre un élément (31c) qui empêche le premier palier (70) de se déplacer vers la portion de siège (29).

P1

P2

POWER
CYLINDER

FIG. 1

FIG. 2

ATTRACTION DIRECTION

IN

IN

OUT

EP 2 282 091 B1

FIG. 3

EP 2 282 091 B1

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001180507 A

- US 4518938 A